# EUROPEAN PATENT APPLICATION

(11) **EP 2 141 125 A1**
(43) Date of publication of application: **06.01.2010**
(21) Application number: 08738913.6
(22) Date of filing: 26.03.2008
(51) Int. Cl.: C01G 37/02, C25D 3/06, C25D 21/14

(54) **CHROMIUM HYDROXIDE, METHOD FOR PRODUCING THE SAME, TRIVALENT CHROMIUM-CONTAINING SOLUTION USING THE SAME, AND CHROMIUM PLATING METHOD**

(30) Priority: 27.04.2007 JP 2007119907
(71) Applicant: Nippon Chemical Industrial Co., Ltd., Koto-ku, Tokyo 136-8515 (JP); Hoshino, Shigeo, 6-6-52 Sugao Miyamae-ku Kawasaki-shi Kanagawa 216-0015 (JP); Shimpo, Ryokichi, 3-204-5 Oomano-cho Koshigaya-shi Saitama 343-0844 (JP)
(72) Inventor: HOSHINO, Shigeo, Kanagawa 216-0015 (JP); SHIMPO, Ryokichi, Kanagawa 343-0844 (JP); TANAKA, Yasuyuki, Tokyo 136-8515 (JP)
(74) Representative: Jenkins, Peter David
(86) International application number: PCT/JP2008/055725
(87) International publication number: WO 2008/136223

(57) **Abstract**

Chromium hydroxide of the invention has an average particle size D determined from a scanning electron micrograph of 40 to 200 nm and a degree of agglomeration of 10 and more and less than 70, the degree of agglomeration being defined to be a ratio of a volume average particle size D50 determined with a particle size analyzer to the average particle size D, D50/D. The chromium hydroxide is suitably obtained by adding an aqueous solution containing trivalent chromium to an aqueous solution of an inorganic alkali at a reaction temperature of 0°C or higher and lower than 50°C. The inorganic alkali is preferably an alkali metal hydroxide.

## Description

### Technical Field

This invention relates to chromium hydroxide and a process of preparing the same. The invention also relates to a trivalent chromium-containing liquid prepared using the chromium hydroxide and a chromium plating method using the chromium hydroxide.

### Background Art

Chromium plating is used for decorative or industrial purposes in a variety of industrial fields. A chromium plate is widely used for decorative purpose because of high resistant to corrosion and tarnish in the atmosphere. A chromium plate is also used widely as a coat of mechanical parts requiring high wearability because of its high hardness and a low friction coefficient. A large quantity of hexavalent chromium is used in a chromium plating bath, To eliminate the human health risk, hexavalent chromium in waste liquid from plating operations must be reduced to trivalent chromium under very strict conditions so as not to be emitted into the environment. Therefore, it has been demanded to develop a plating bath containing less toxic trivalent chromium in place of hexavalent chromium.

Among known plating baths containing trivalent chromium is the chromium plating bath disclosed in patent document 1, which uses a trivalent chromium compound, such as chromium chloride, chromium sulfate or chromium sulfamate. In using trivalent chromium of an inorganic salt, such as chromium chloride or chromium sulfate, as a chromium source, however, while chromium is consumed by plating, the counter anion (chloride ion or sulfate ion) of the chromium salt remains in the bath. The bath should be maintained at a constant composition by adequately replenishing with a chromium source of an amount corresponding to the chromium consumed. It follows that the chloride ion or sulfate radical is accumulated in the plating bath. At last, it is impossible to maintain the bath composition constant so that the whole bath should be changed, and the spent bath is discarded as a waste.

To overcome the problem, patent document 2 proposes a trivalent chromium plating method using a plating bath containing chromium chloride and ammonium chloride, in which part of the bath is circulated through a cooling unit where part of the ammonium chloride is precipitated and removed so that chromium plating may be continued with a controlled ammonium chloride concentration in the bath.

Patent document 3 proposes a solution to the problem, in which chromium hydroxide that does not involve accumulation of counter anion is used in its water-containing gel form as a trivalent chromium source. However, chromium hydroxide generally has low solubility in water and so in an acidic aqueous solution used as a usual plating solution. Therefore, the plating bath preparation requires stirring under heating for a long time. In replenishing the bath to make up for the consumption of chromium, dissolving chromium hydroxide also needs long time. For these reasons, the plating operation is occasionally interrupted or suspended, which has raised another problem in plating bath preparation and plating operation.

The following processes (1) to (3) are known as the process for preparing chromium hydroxide (see patent documents 1 to 3). Process (1):
A reducing agent is added to an aqueous liquid containing chromate ions such as discharged from a chromium plating operation to previously reduce the chromate ions to trivalent chromium ions. Sodium hydroxide is added thereto to obtain a precipitate of chromium hydroxide (see patent document 4). However, chromium hydroxide as obtained by this process is often found to have impurity ions, such as sulfate ion, attached thereto and needs purification for application to various uses. Patent document 4 suggests washing the product with water at pH 9.5 or higher.

Process (2):
Urea is added to an aqueous sulfate solution containing trivalent chromium. The solution is heated to a temperature ranging from about 90°C to the boiling point of the aqueous solution to decompose urea thereby to raise the pH of the solution. Meanwhile the sulfate ion concentration of the aqueous solution is maintained at about 1 mol/l or lower. As a result, basic chromium sulfate is precipitated and/or separated. The basic chromium sulfate is heated together with urea to a temperature in the range recited above or neutralized with a hydroxide or carbonate of an alkali metal, alkaline earth metal or ammonium to produce chromium hydroxide (see patent document 5). Patent document 5 mentions that, when chromium hydroxide is produced by neutralization, it is easier to start with an aqueous solution of a chloride of chromium. Nevertheless, the document is silent on the solubility of obtained chromium hydroxide and the sequence of addition in carrying out neutralization.

Process (3):
An aqueous solution of a trivalent chromium salt is neutralized with sodium hydroxide or aqueous ammonia. The resulting chromium hydroxide slurry is filtered to collect the precipitate, which is re-suspended in water. The aqueous slurry is passed through an ion exchange resin to remove water soluble impurities by adsorption (see patent document 6). Patent document 6 describes a process comprising neutralizing an aqueous solution of chromium sulfate or chromium chloride with sodium hydroxide or aqueous ammonia, separating the precipitate from the resulting chromium hydroxide slurry by filtration, and washing the precipitate to remove impurity ions. In the working example, however, sodium hydroxide is added to a chromium sulfate aqueous solution. Patent document 6 is silent on the solubility of the resulting chromium hydroxide.

Separately from these processes, patent document 7 discloses chromium (III) salt with various inorganic acids but has no mention of chromium hydroxide.

Patent document 1 JP 9-95793A
Patent document 2 JP 2002-322599A
Patent document 3 JP 2006-249518A
Patent document 4 JP 52-35594A
Patent document 5 JP 53-132499A
Patent document 6 JP 2-92828A
Patent document 7 US 2007/0086938A1

### Disclosure of the Invention

An object of the invention is to provide highly soluble chromium hydroxide and a process for the preparation thereof.

As a result of extensive investigations, the present inventors have found that chromium hydroxide with increased solubility in acidic aqueous solutions can be obtained by limiting particle size and degree of agglomeration of chromium hydroxide to be formed to the respective specific ranges.

Based on the above findings, the present invention provides chromium hydroxide characterized by having a degree of agglomeration of 10 and more and less than 70 and an average particle size D of 40 to 200 nm, wherein the degree of agglomeration being defined to be a ratio of a volume average particle size D50 determined with a particle size analyzer to an average particle size D determined from a scanning electron micrograph, D50/D.

The invention also provides a process of preparing chromium hydroxide including the steps of adding an aqueous solution containing trivalent chromium to an inorganic alkali aqueous solution at a reaction temperature of 0°C or higher and lower than 50°C. The process is characterized in that the addition of the aqueous solution containing trivalent chromium is such that the amount of trivalent chromium may not be locally excessive relative to the amount of the alkali.

The invention also provides a trivalent chromium-containing liquid for use in chromium plating or surface treatment or chromate treatment of metals, which is characterized by using the chromium hydroxide of the invention as a trivalent chromium source. The invention also provides a chromium plating method using the trivalent chromium-containing liquid.

The invention also provides a replenisher for a trivalent chromium-containing liquid for use in chromium plating or surface treatment or chromate treatment of metals. The replenisher comprises a slurry of the chromium hydroxide according to the invention.

The invention also provides a chromium plating method characterized by using a plating bath containing trivalent chromium and replenishing the plating bath with a replenisher. The plating bath contains 100 to 300 g/l of chromium chloride hexahydrate (CrCl₃H₂O), 20 to 30 g/l of boric acid (H₃BO₃), 30 to 50 g/l of glycine (NH₂CH₂COOH), 70 to 150 g/l of ammonium chloride (NH₄Cl), and 20 to 50 g/l of aluminum chloride hexahydrate (AlCl_{3·}6H₂O), and the replenisher is the above described slurry of the chromium hydroxide.

### Brief Description of the Drawings

Fig. 1 is a scanning electron micrograph (SEM) (X 20,000) of the chromium hydroxide obtained in Example 3.
Fig. 2 is an SEM (X 5,000) of the chromium hydroxide obtained in Example 3
Fig. 3 is an SEM (X 20,000) of the chromium hydroxide obtained in Comparative Example 2.
Fig. 4 is an SEM (X 5,000) of the chromium hydroxide obtained in Comparative Example 2.
Fig. 5 is an SEM (X 20,000) of the chromium hydroxide obtained in Comparative Example 10.
Fig. 6 is an SEM (X 5,000) of the chromium hydroxide obtained in Comparative Example 10.

### Detailed Description of the Invention

The invention will be described based on its preferred embodiments. The chromium hydroxide of the invention is characterized in that it is insoluble or sparingly soluble in pure water but highly soluble in an acidic aqueous solution, for example, an acidic aqueous solution at pH of 3 or less. Chromium hydroxide with such characteristics is specified by its particle size and degree of agglomeration. Specifically, the chromium hydroxide of the invention is finely particulate and has a low degree of agglomeration. The degree of agglomeration as used herein is defined to be D50/D, wherein D50 is a volume average particle size determined with a particle size analyzer, and D is an average particle size determined from an SEM image. According to the definition, a larger value of D50/D indicates a higher degree of agglomeration of the particles.

The degree of agglomeration is determined as follows. Chromium hydroxide formed is thoroughly dispersed in water by means of, e.g., a household mixer, and the dispersion is analyzed with a laser diffraction/scattering particle size analyzer to determine a volume average particle size D50. The diameter of 200 primary particles of chromium hydroxide on an SEM image is measured to obtain an average particle size D. When a primary particle is aspherical, the maximum length across the particle is taken as a diameter. The thus determined D50 divided by D is a degree of agglomeration.

The degree of agglomeration, thus defined, of the chromium hydroxide of the invention is 10 or more and less than 70. If it exceeds 70, solubility in an acidic aqueous solution is insufficient. The chromium hydroxide of the invention having a lower degree of agglomeration exhibits higher solubility in an acidic aqueous solution. From this, it is preferred for the chromium hydroxide to have as small a degree of agglomeration as possible. The lowest degree of agglomeration achievable by the current technology being limited, the lower limit of the degree of agglomeration of the chromium hydroxide according to the invention is set at 10. With a degree of agglomeration of 10 to 60, change with time is reduced so that further improved solubility is retained.

The chromium hydroxide of the invention is as fine as having an average primary particle size D of 40 to 200 nm, preferably 50 to 100 nm. The chromium hydroxide with such a small particle size shows improved solubility in an acidic aqueous solution only when the above recited condition of degree of agglomeration is satisfied. If the average particle size D is less than 40 nm, it is likely that an electrostatic attraction force becomes so strong as to allow the particles to agglomerate, resulting in reduced solubility. If the average particle size D is more than 200 nm, the specific surface area will be reduced to provide a reduced site reactive with an acid, also resulting in reduced solubility.

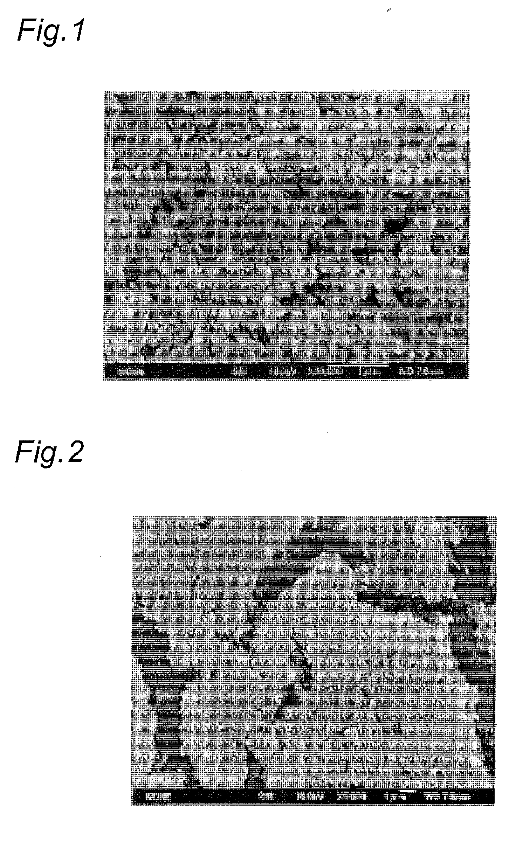

The chromium hydroxide particles of the invention are not limited in shape and may be, for example, blocky. As will be described with reference to Figs. 1 and 2, they are generally spherical.

The chromium hydroxide of the invention is usually in a dry, powdered form or a suspended form in water (slurry). In order to secure high solubility in an acidic aqueous solution, it is preferred that the preparation of the chromium hydroxide be immediately followed by preparation of a slurry of the chromium hydroxide. The slurry may or may not contain a component other than the chromium hydroxide. The other component that may be contained in the slurry may be Na, K, Cl, SO₄, NH₄, and so forth. For use as a replenisher of, for example, a plating solution used for chromium plating or a treating liquid used for metal surface treatment or chromate treatment, it is preferred that the slurry be substantially free from impurity ions so as to avoid accumulation of unnecessary ions accompanying replenishment. As referred to herein, the term "impurity ions" denotes ions other than H⁺ and OH⁻ ions. The phrase "substantially free from impurity ions" is intended to mean that any impurity ions are not intentionally added during the preparation of chromium hydroxide and the subsequent preparation of the slurry of the chromium hydroxide and that the presence of impurity ions unavoidably incorporated into the system is accepted.

As stated, the chromium hydroxide of the invention has high solubility in an acidic aqueous solution (e.g., an acidic aqueous solution having a pH of 3 or lower). Moreover, the solubility is retained even after long-term storage. In contrast, conventionally prepared chromium hydroxide undergoes change with time during long-term storage and is liable to change to a hydroxide sparingly soluble in an acidic or alkaline aqueous solution. Although the reason why is not clear, it is considered that chromium is converted to a sparingly soluble ol or oxo form, which may be the cause of chromium hydroxide requiring long time stirring to dissolve completely in the preparation of a chromium plating solution.

The expression "high solubility" and its cognates as used herein mean that chromium hydroxide corresponding to 1 g of Cr added to 1 liter of a hydrochloric acid aqueous solution of pH 0.2 at 25°C dissolves completely within 30 minutes, Whether chromium hydroxide dissolves is decided by observation with the naked eye. The time required for complete dissolution of chromium hydroxide is the time required for the system to become clear.

A preferred process for preparing the chromium hydroxide of the invention will then be described. In the process of the present invention, an aqueous solution containing trivalent chromium is added to an aqueous solution of an inorganic alkali at a reaction temperature of 0°C or higher and lower than 50°C to form chromium hydroxide. The inventors have found that adding an aqueous solution containing trivalent chromium into an aqueous solution of an inorganic alkali unexpectedly results in the formation of chromium hydroxide having the above specified degree of agglomeration and average particle size and exhibiting high solubility in an acidic aqueous solution. Conversely, in conventional processes of preparing chromium hydroxide, for example, the processes disclosed in Patent documents 4 and 6, an alkali such as sodium hydroxide is added to an aqueous solution containing trivalent chromium. Chromium hydroxide obtained by these conventional processes has poor solubility in an acidic aqueous solution.

The solubility of the chromium hydroxide produced is also influenced by the reaction temperature (the temperature of the liquid phase) as well as the sequence of adding the two components, the inorganic alkali aqueous solution and the trivalent chromium-containing aqueous solution. In detail, at a reaction temperature higher than 50°C, the chromium hydroxide particles farmed tend to agglomerate or be blocky, failing to have high solubility. If the reaction temperature is lower than 0°C, a trivalent chromium salt and/or the inorganic alkali can precipitate. To obtain chromium hydroxide with higher solubility, the reaction temperature is preferably 10° to 50°C, more preferably 10° to 40°C.

Since the reaction is a neutralization reaction, mixing the starting materials yields chromium hydroxide with desired characteristics. The reaction system is preferably stirred during the reaction to secure reaction uniformity and accelerate the reaction. When the stirring is insufficient, cases are sometimes met in which the amount of trivalent chromium locally becomes excessive relative to the amount of the alkali. Chromium hydroxide obtained under such a condition is inferior in solubility in an acidic aqueous solution. Therefore, it is important that the addition of the aqueous solution containing trivalent chromium be such that the amount of trivalent chromium may not locally become excessive relative to the amount of the alkali. From this viewpoint, the stirring condition is preferably adjusted so as to prevent local liquid stagnation thereby to achieve uniform mixing of the reaction system. As used herein, the expression "the amount of trivalent chromium is excessive relative to the amount of the alkali" includes a state in which an inorganic alkali aqueous solution is added to a trivalent chromium-containing aqueous solution as opposed to the manner of addition used in the invention.

The rate of adding the trivalent chromium-containing aqueous solution to the inorganic alkali aqueous solution is preferably slow. Although the rate of addition is not particularly limited, it is preferred for obtaining highly soluble chromium hydroxide to adjust the rate of addition according to the ability of the stirrer used or the scale of production so as to prevent non-uniform mixture during the reaction.

The ratio of the trivalent chromium-containing aqueous solution to the inorganic alkali aqueous solution is preferably decided so that the reaction system may have a pH of 7.0 to 13 at the reaction temperature.

Any water soluble chromium (III) salt may be used as a chromium source in the aqueous solution containing trivalent chromium. Examples of such chromium (III) salts include chromium chloride, chromium sulfate, ammonium chromium sulfate, potassium chromium sulfate, chromium format, chromium fluoride, chromium perchlorate, chromium sulfamate, chromium nitrate, and chromium acetate. These salts may be used either alone or as mixed. The salt may be used as an aqueous solution or in the form of powder. For example, 35% liquid chromium chloride, 40% liquid chromium sulfate (both available from Nippon Chemical Industrial Co., Ltd.) and commercially available chromium chloride crystal products can be used. Preferred of the chromium salts are chromium chloride and chromium sulfate in terms of leaving no organic matter and for economical consideration.

An aqueous solution containing hexavalent chromium having been reduced to trivalent is also useful as a trivalent chromium-containing aqueous solution. For instance, an aqueous solution obtained by bubbling sulfurous acid gas through an aqueous solution of a bichromate to reduce hexavalent chromium to trivalent chromium or an aqueous solution obtained by adding sulfuric acid to a bichromic acid aqueous solution and reducing hexavalent chromium to trivalent chromium with an organic substance may be used.

The chromium concentration in the trivalent chromium-containing aqueous solution is preferably up to 15% by weight, more preferably 0.5 to 6% by weight.

Examples of the inorganic alkali used in the inorganic alkali aqueous solution, to which the trivalent chromium-containing aqueous solution is added, include alkali metal hydroxides, such as sodium hydroxide and potassium hydroxide, and ammonia. Use of an organic alkali in place of the inorganic alkali results in the formation of a water soluble complex salt between the organic alkali and chromium. As a result, chromium can remain in the filtrate after collecting the produced chromium hydroxide. Use of an organic alkali should therefore be avoided. An alkali metal hydroxide is a particularly preferred inorganic alkali because the resulting chromium hydroxide maintains its good solubility in an acidic aqueous solution for an extended period of time.

The concentration of the inorganic alkali in the inorganic alkali aqueous solution is preferably 5% to 50% by weight, more preferably 10% to 40% by weight.

After adding a trivalent chromium-containing aqueous solution to an inorganic alkali aqueous solution to form chromium hydroxide, the slurry is filtered to collect chromium hydroxide as solid matter, which is then washed. Filtration is conducted in a usual manner, for example, by suction using a Buchner funnel. The filter cake is washed with water. Washing with water is conducted by, for example, repulping the cake on a Buchner funnel with water, followed by filtration by suction. Washing is preferably performed until the washing has a conductivity of, e.g., 5 mS/cm or less. For the washing to have a high conductivity means that the washed chromium hydroxide still contains a considerable amount of an alkali hydroxide salt that is a reaction by-product. This reaction by-product should be removed as completely as possible because, when the chromium hydroxide is used as a chromium source of a trivalent chromium plating bath, the by-product would be accumulated in the plating bath. This is the reason the washing is preferably carried out at least until the conductivity of the washing is reduced to the value recited. The filtration and washing operations are preferably carried out at a low liquid temperature of 0° to 50°C, more preferably 20° to 40°C, to prevent conversion of chromium into an ol or oxo form and resultant formation of a sparingly soluble substance.

After the washing, the chromium hydroxide is dried to powder, or mixed with water to make a slurry having a prescribed concentration.

The thus prepared chromium hydroxide has high solubility in an acidic aqueous solution. It is therefore useful as a source of trivalent chromium in a chromium plating bath, a metal surface treatment bath, or a chromate treatment bath. Using the chromium hydroxide of the invention as a source of trivalent chromium allows for shortening the time for the preparation of a plating bath or a treatment bath. The absence of undissolved chromium hydroxide in a plating bath or a treatment bath secures formation of a good quality chromium plate or chromate film.

Accordingly, the invention provides a trivalent chromium-containing liquid prepared by using the above described highly soluble chromium hydroxide. The trivalent chromium-containing liquid provided by the invention is useful in decorative surface finish or industrial trivalent chromium plating. It is also useful in surface treatment of various metals, such as plating on a nickel plate. It is also useful in chromating the surface of a zinc-plated or tin-plated steel substrate. In short, the trivalent chromium-containing liquid according to the invention may be a trivalent chromium plating bath or a trivalent chromate treatment bath. In what follows, these liquids will be inclusively referred to as a treatment bath unless otherwise specified.

In the cases where the trivalent chromium-containing liquid is used as a trivalent chromium plating bath, the plating bath contains trivalent chromium originated in the chromium hydroxide and other components including an organic acid, For use as a trivalent chromate treatment bath, the bath contains trivalent chromium originated in the chromium hydroxide and further contains other components including a cobalt compound, a silicon compound, a zinc compound, and a variety of organic acids.

The cobalt compound that can be used in the chromate treatment bath is exemplified by cobalt chloride, cobalt nitrate, cobalt sulfate, cobalt phosphate, and cobalt acetate. These cobalt compounds may be used either individually or as a mixture of two or more thereof. The silicon compound is exemplified by colloidal silica, sodium silicate, potassium silicate, and lithium silicate. The silicate compounds may be used either individually or as a mixture of two or more thereof. Examples of the zinc compound include zinc chloride, zinc sulfate, zinc nitrate, zinc oxide, zinc carbonate, zinc phosphate, and zinc acetate. They may be used either individually or as a mixture of two or more thereof. Examples of the organic acid include oxalic acid, malonic acid, succinic acid, citric acid, adipic acid, tartaric acid, malic acid, and glycine. These organic acids are believed to serve to retain trivalent chromium in a stable form in a chromium plating bath by virtue of their chelating action.

The chromate treatment bath as referred to above preferably contains, for example, 0.005 to 1.0 mol/l of chromium. The molar ratio of chromium to the organic acid is preferably 1 to 5 mol per mole of chromium.

The invention also provides, in addition to the aforementioned treatment baths, a replenisher for a treatment bath, such as a chromium plating bath, a metal surface treatment bath, or a chromate treatment bath. The replenisher comprises a slurry of the chromium hydroxide according to the invention. The slurry is preferably free from impurity ions as previously described. In metal surface treatment or chromate treatment, an inorganic anion, e.g., a sulfate ion, a nitrate ion, or a chloride ion, remains in the bath without being taken into the film. As a chromium source is added to a treatment bath, the inorganic anion, the counter anion of the chromium source, is gradually accumulated in the treatment bath, resulting in a change of composition of the bath. Since the above described replenisher, which comprises a slurry of the chromium hydroxide, contains no such anions, the change in the treatment bath's composition caused by the addition of the replenisher as a chromium source is reduced. As a result, the treatment bath has an extended service life without requiring frequent replacement due to compositional changes.

The treatment baths that can be replenished by the addition of the replenisher for supplying a chromium source are not particularly limited and include any conventional treatment bath containing trivalent chromium. In carrying out trivalent chromium plating, a plating bath having the following composition is preferably used to provide a good plate surface.

| | |
|---|---|
| Chromium chloride hexahydrate (CrCl_{3·}6H₂O) | 100 to 300 g/l |
| Boric acid (H₃BO₃) | 20 to 30 g/l |
| Glycine (NH₂CH₂COOH) | 30 to 50 g/l |
| Ammonium chloride (NH₄Cl) | 70 to 150 g/l |
| Aluminum chloride hexahydrate (AlCl_{3·}6H₂O) | 20 to 50 g/l |

When a plating bath having the above composition is used, chromium plating is preferably carried out at a current density of 20 to 80 A/dm² and a bath temperature of 35° to 65°C using a carbon plate or a titanium-platinum plate as an anode.

The replenisher of the invention is added to a plating bath, a chromate treatment bath, or a like treatment bath in an amount appropriate to the consumption of chromium ions of the bath during plating, chromating, or a like treatment. The addition may be either continuous or intermittent.

While the invention has been described with reference to preferred embodiments, it should be understood that the invention is not limited thereto, and various changes and modifications can be made therein without departing from the spirit and scope thereof. These changes and modifications which are obvious to those skilled in the art are intended to be included within the scope of the invention.

### Examples

The invention will now be illustrated in greater detail with reference to Examples. Unless otherwise noted, all the percents are by weight.

### Examples 1 to 6

A 10% sodium hydroxide aqueous solution weighing 140 g in a container was prepared. In another container 52 g of a 35% chromium chloride aqueous solution (available from Nippon Chemical) was diluted with 208 g of water to prepare a 7% chromium chloride aqueous solution. Both the solutions were adjusted to the temperature shown in Table 1. While the sodium hydroxide aqueous solution was stirred at the speed shown in Table 1, the chromium chloride aqueous solution was added thereto at the rate shown in Table 1 until the pH of the reaction system was reduced to the value shown in Table 1. The precipitate thus formed was collected by filtration and washed with water at 30°C until the conductivity of the washing dropped to 1 mS/cm to obtain about 12 g of chromium hydroxide. The resulting chromium hydroxide was suspended in pure water to obtain an 8% slurry. The solubility and degree of agglomeration of the chromium hydroxide were determined, The results obtained are shown in Table 1. An SEM image of the chromium hydroxide obtained in Example 3 is shown in Fig. 1 (X 20,000) and Fig. 2 (X 5,000). As previously stated, the solubility of chromium hydroxide is expressed in terms of time required for chromium hydroxide corresponding to 1 g of Cr added to 1 liter of a hydrochloric acid aqueous solution of pH 0.2 at 25°C to dissolves completely. The solubility was measured immediately after the preparation and after 90 day storage.

**Table 1**

| Example | Rate of Addition (ml/min) | Reaction Temp. (°C) | Stirring Speed (rpm) | Reaction End pH | D50 (µm) | D* (nm) | Degree of Agglomeration | Solubility (min) | |
|---|---|---|---|---|---|---|---|---|---|
| | | | | | | | | After prepn. | After 90 Days |
| 1 | 30 | 10 | 700 | 10 | 3.7 | 93 | 40 | 9 | 45 |
| 2 | 100 | 10 | 700 | 10 | 3.0 | 88 | 34 | 8 | 125 |
| 3 | 30 | 20 | 700 | 10 | 4.3 | 95 | 45 | 13 | 28 |
| 4 | 100 | 20 | 700 | 10 | 3.5 | 90 | 39 | 11 | 36 |
| 5 | 30 | 30 | 700 | 10 | 4.9 | 90 | 54 | 15 | - |
| 6 | 30 | 40 | 700 | 10 | 5.6 | 86 | 65 | 18 | - |

| | | | | | | | | | |
|---|---|---|---|---|---|---|---|---|---|
| ^{*} D: Average particle size based on SEM image (hereinafter the same) | | | | | | | | | |

### Comparative Examples 1 to 9

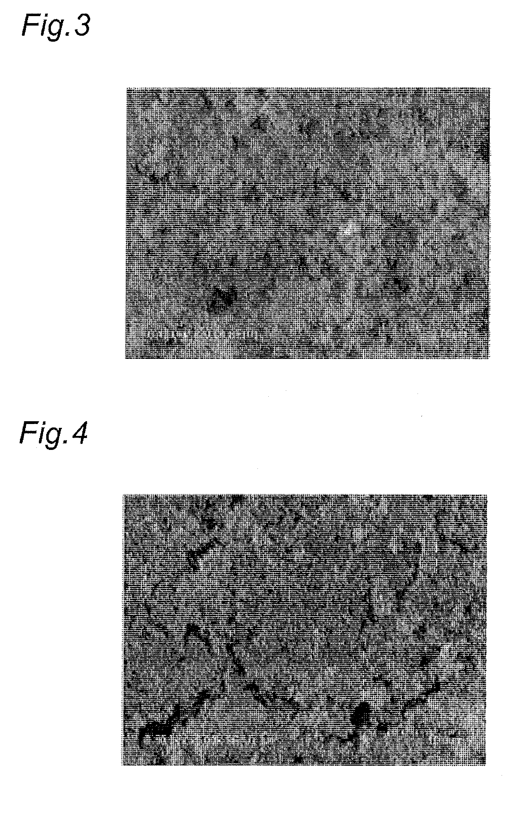

A 20% sodium hydroxide aqueous solution weighing 70 g in a container was prepared. In another container 52 g of a 35% chromium chloride aqueous solution (available from Nippon Chemical) was diluted with 208 g of water to prepare a 7% chromium chloride aqueous solution. Both the solutions were adjusted to the temperature shown in Table 2. In the reverse fashion to Example 1 to 6, the chromium chloride aqueous solution was stirred, and the sodium hydroxide aqueous solution was added thereto at the rate shown in Table 2. The precipitate thus formed was collected by filtration and washed with water to obtain about 12 g of chromium hydroxide. Otherwise the same procedures as outlined in Examples 1 to 6 were employed to obtain a slurry of the chromium hydroxide. The solubility (only immediately after the preparation), average particle size, and degree of agglomeration of the resulting chromium hydroxide were determined in the same manner as in Example 1 to 6. The results obtained are shown in Table 2. An SEM image of the chromium hydroxide obtained in Comparative Example 2 is shown in Fig, 3 (X 20,000) and Fig. 4 (X 5,000),

**Table 2**

| Comp. Example | Rate of Addition (ml/min) | Reaction Temp. (°C) | D50 (µm) | D (nm) | Degree of Agglomeration | Solubility (min) |
|---|---|---|---|---|---|---|
| 1 | 10 | 20 | 7.5 | 59 | 127 | >120 |
| 2 | 30 | 20 | 6.1 | 57 | 107 | >120 |
| 3 | 100 | 20 | 5.2 | 56 | 93 | 53 |
| 4 | 10 | 50 | 5.3 | 57 | 93 | 45 |
| 5 | 30 | 50 | 4.8 | 55 | 87 | 43 |
| 6 | 100 | 50 | 4.0 | 54 | 74 | >120 |
| 7 | 10 | 90 | 4.9 | 55 | 89 | >120 |
| 8 | 30 | 90 | 4.5 | 53 | 85 | >120 |
| 9 | 100 | 90 | 3.5 | 49 | 71 | >120 |

### Comparative Examples 10 to 13

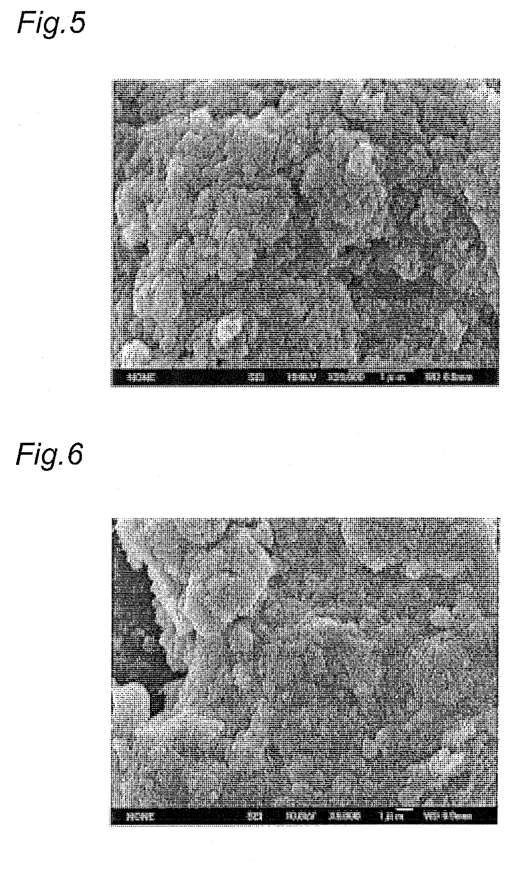

Chromium hydroxide and a slurry containing the same were prepared in the same manner as in Example 1 to 6, except that the rate of adding the chromium chloride aqueous solution and the temperature of the sodium hydroxide aqueous solution and the chromium chloride aqueous solution were as shown in Table 3. The solubility, average particle size, and degree of agglomeration of the resulting chromium hydroxide were determined in the same manner as in Example 1 to 6. The results obtained are shown in Table 3. An SEM image of the chromium hydroxide obtained in Comparative Example 10 is shown in Fig. 5 (X 20,000) and Fig. 6 (X 5,000).

**Table 3**

| Comp. Example | Rate of Addn. (ml/min) | Reaction Temp. (°C) | D50 (µm) | D (nm) | Degree of Agglomeration | Solubility (min) | |
|---|---|---|---|---|---|---|---|
| | | | | | | After Prepn. | After 90 Days |
| 10 | 30 | 50 | 6.1 | 80 | 75 | 49 | - |
| 11 | 100 | 50 | 5.1 | 73 | 70 | 83 | - |
| 12 | 30 | 90 | 7.1 | 80 | 89 | >120 | - |
| 13 | 100 | 90 | 6.0 | 75 | 80 | >120 | - |

### Examples 7 to 9 and Comparative Examples 14 to 17

Chromium hydroxide and a slurry containing the same were prepared in the same manner as in Example 1 to 6, except for changing the rate of stirring the sodium hydroxide aqueous solution as shown in Table 4. The solubility, average particle size, and degree of agglomeration of the resulting chromium hydroxide were determined in the same manner as in Example 1 to 6, except that the solubility was determined immediately after the preparation and after 7 day storage. The results obtained are shown in Table 4. In these Comparative Examples the amount of trivalent chromium was locally excessive relative to the amount of the alkali due to the lower stirring speed than in Examples so that the resulting chromium hydroxide was inferior in solubility in an acidic solution.

**Table 4**

| | Rate of Addition (ml/min) | Reaction Temp. (°C) | Stirring Speed (rpm) | Reaction End pH | D50 (µm) | D(nm) | Degree of Agglomeration | Solubility (min) | |
|---|---|---|---|---|---|---|---|---|---|
| | | | | | | | | After Prepn. | After 7 Days |
| Example 7 | 30 | 20 | 700 | 7 | 1.1 | 42 | 26 | 15 | 15 |
| Example 8 | 30 | 20 | 700 | 10 | 4.0 | 85 | 47 | 8 | 8 |
| Example 9 | 30 | 40 | 700 | 10 | 5.4 | 80 | 68 | 19 | 35 |
| Comp_{.} Examples 14 | 30 | 20 | 300 | 7 | 5.8 | 37 | 157 | 9 | 85 |
| Comp. Example 15 | 30 | 20 | 300 | 10 | 6.1 | 50 | 122 | 11 | 60 |
| Comp. Example 16 | 30 | 40 | 300 | 7 | 4.3 | 31 | 139 | 190 | 670 |
| Comp. Example 17 | 30 | 40 | 300 | 10 | 5.0 | 40 | 125 | 160 | 420 |

### Example 10

Chromium hydroxide and a slurry containing the chromium hydroxide were prepared in the same manner as in Example 3, except for replacing the sodium hydroxide aqueous solution with 195 g of a 10% potassium hydroxide aqueous solution. The solubility, average particle size, and degree of agglomeration of the resulting chromium hydroxide were determined in the same manner as in Example 1 to 6. The results obtained are shown in Table 5.

**Table 5**

| Example | Rate of Addn. (ml_{/}min) | Reaction Tetnp.(°C) (µm) (nm) | D50 | D | Degree of Agglomeration | Solubility (min) | |
|---|---|---|---|---|---|---|---|
| | | | | | | After 90 Prepn_{.} | Days |
| 10 | 30 | 20 | 4.4 | 90 | 49 | 7 | 28 |

### Example 11

A 10% aqueous ammonia weighing 59 g in a container was prepared. In another container 52 g of a 35% chromium chloride aqueous solution (available from Nippon Chemical) was diluted with 208 g of water to prepare a 7% chromium chloride aqueous solution. Both the solutions were adjusted to the temperature shown in Table 6. Otherwise the same procedures as outlined in Examples 1 to 6 were employed to obtain about 12 g of chromium hydroxide and a slurry of the chromium hydroxide. The solubility, average particle size, and degree of agglomeration of the resulting chromium hydroxide were determined in the same manner as in Example 1 to 6, except that the solubility was measured immediately after the preparation and after 14 day storage. The results obtained are shown in Table 6.

**Table 6**

| Example | Rate of Addn. (ml/lmin) | Reaction Temp. (°C) | D50 (µm) | D (nm) | Degree of Agglomeration | Solubility (min) | |
|---|---|---|---|---|---|---|---|
| | | | | | | After Prepn. | After 14 Days |
| 11 | 30 | 20 | 4.3 | 70 | 61 | 6 | >120 |

From the results of Examples and Comparative Examples, it is seen that all the chromium hydroxide products obtained in Examples have high solubility. In particular, it is apparent from comparison between Tables 1 and 6 that using an alkali metal hydroxide as an inorganic alkali to be used in the preparation of chromium hydroxide provides chromium hydroxide that retains high solubility even after long-term storage.

In contrast to this, the chromium hydroxide products obtained in Comparative Examples 1 to 9, in which an inorganic alkali aqueous solution is added to a trivalent chromium-containing aqueous solution, have a small average primary particle size and form agglomerates to have low solubility. Even in the cases where a trivalent chromium-containing aqueous solution is added to an inorganic alkali aqueous solution to prepare chromium hydroxide, when the reaction temperature is high as in Comparative Examples 10 to 13, the primary particles agglomerate to exhibit reduced solubility.

### Example 12

A trivalent chromium plating bath having the following composition was prepared. A mild steel rod was plated with the plating bath in an 8-liter boxy plating tank using a carbon plate as an anode at a bath temperature of 50°C and a current density of 40 A/dm². The amount of chromium consumed and the chromium concentration of the bath were calculated from the difference of weight of the rod between before and after the plating. When the chromium concentration of the plating bath decreased by 1 to 2 g/l, the chromium hydroxide slurry obtained in Example 3 was added to the bath in an amount corresponding to the deposited metallic chromium, and chromium plating was continued with thorough stirring, As a result, good chromium plating was achieved.

| Plating bath composition: | |
|---|---|
| Chromium chloride hexahydrate | 300 g/l |
| Boric acid | 30 g/l |
| Glycine | 50g/l |
| Ammonium chloride | 130 g/l |
| Aluminum chloride hexahydrate | 50 g/l |

### Comparative Example 18

Chromium plating was carried out in the same manner as in Example 12, except for using as a replenisher the chromium hydroxide slurry obtained in Comparative Example 2. As a result, undissolved chromium hydroxide was found remaining in the plating bath, and the resulting plate had a poor surface.

### Example 13

Chromium plating was carried out in the same manner as in Example 12, except for replacing the chromium hydroxide used in Example 12 with the chromium hydroxide obtained in Example 11. As a result, a plate was successfully formed on the surface of the mild steel rod.

### Comparative Example 19

Chromium plating was carried out in the same manner as in Example 13, except for replacing the chromium hydroxide used in Example 13 with the chromium hydroxide obtained in Comparative Example 10. As a result, the resulting plate had a poor surface.

### Industrial Applicability

As described in detail, the present invention provides chromium hydroxide having higher solubility in an acidic aqueous solution than chromium hydroxide prepared by conventional processes. Using the chromium hydroxide of the invention as a trivalent chromium source allows for reduction of the time required for the preparation of a trivalent chromium plating bath and elimination of the adverse influence of undissolved chromium hydroxide that would be otherwise exerted on a chromium plate. In using a trivalent chromium-containing liquid prepared by using the chromium hydroxide of the invention in chromium plating, metal surface treatment or chromate treatment, the problem of accumulation of counter anions of a trivalent chromium source in the treatment bath is averted so that it is easier to maintain the composition of the treatment bath constant. The time for preparing the treatment bath is markedly shortened, which will greatly benefit associated industries.

## Claims

1. Chromium hydroxide having an average particle size D determined from a scanning electron micrograph of 40 to 200 nm and a degree of agglomeration of 10 and more and less than 70, the degree of agglomeration being defined to be a ratio of a volume average particle size D50 determined with a particle size analyzer to the average particle size D, D50/D.

2. The chromium hydroxide according to claim 1, obtained by adding an aqueous solution containing trivalent chromium to an aqueous solution of an inorganic alkali at a reaction temperature of 0°C or higher and lower than 50°C.

3. The chromium hydroxide according to claim 1, being in the form of a slurry in pure water, the slurry being substantially free from an impurity ion.

4. A process of preparing chromium hydroxide comprising the step of adding an aqueous solution containing trivalent chromium to an aqueous solution of an inorganic alkali at a reaction temperature of 0°C or higher and lower than 50°C, wherein the addition of the aqueous solution containing trivalent chromium is such that the amount of trivalent chromium is not locally excessive relative to the amount of the alkali.

5. The process according to claim 4, wherein the inorganic alkali is an alkali metal hydroxide.

6. The process according to claim 4, further comprising the steps of filtering the reaction system after the formation of chromium hydroxide and washing the filter cake with water until the washing has a conductivity of 5 mS/cm or less.

7. A trivalent chromium-containing liquid for use in chromium plating or surface treatment or chromate treatment of metals, prepared by using the chromium hydroxide according to claim 1 as a trivalent chromium source.

8. A chromium plating method using the trivalent chromium-containing liquid according to claim 7.

9. A replenisher for a trivalent chromium-containing liquid for use in chromium plating or surface treatment or chromate treatment of metals, comprising a slurry of the chromium hydroxide according to claim 1.

10. A chromium plating method comprising conducting plating using a trivalent chromium plating bath comprising 100 to 300 g/l of chromium chloride hexahydrate (CrCl₃·6H₂O), 20 to 30 g/l of boric acid (H₃BO₃), 30 to 50 g/l of glycine (NH₂CH₂COOH), 70 to 150 g/l of ammonium chloride (NH₄Cl), and 20 to 50 g/l of aluminum chloride hexahydrate (AlCl₃-6H₂O) and replenishing the bath with a replenisher, the replenisher being a slurry of the chromium hydroxide according to claim 1.

11. The chromium plating method according to claim 10, wherein the plating is conducted at a current density of 20 to 80 A/dm² and a bath temperature of 35° to 65°C using a carbon plate or a titanium-platinum plate as an anode.
